# EUROPEAN PATENT SPECIFICATION

(11) **EP 4 557 035 B1**
(45) Date of publication and mention of the grant of the patent: **15.04.2026**
(21) Application number: 24209757.4
(22) Date of filing: 30.10.2024
(51) Int. Cl.: G05D 1/224, G05D 1/229, G05D 1/248, G05D 1/243, G05D 1/648

(54) **ROBOTIC LAWNMOWER SYSTEM**
ROBOTERRASENMÄHERSYSTEM
SYSTÈME DE TONDEUSE À GAZON ROBOTISÉE

(30) Priority: 20.11.2023 SE 2351321
(43) Date of publication of application: 21.05.2025
(73) Proprietor: Husqvarna AB, 561 82 Huskvarna (SE)
(72) Inventor: Nilsson, Adam, Huskvarna (SE); Hellsin, Beppe, Huskvarna (SE); Svensson, Tommy, Huskvarna (SE)

(56) References cited:
- EP-A1- 3 767 420
- CN-A- 115 811 702

## Description

### Technical field

The present disclosure relates to a method for defining a boundary of a work area in a robotic lawnmower system, the system comprising a robotic lawnmower, configured to process the work area and to determine its position in the work area, and a separate, mobile device configured to determine its position in the work area and having a camera configured to capture images of the work area and a display which provides a user interface, enabling a user to define boundary segments of the work area boundary therein as a set of positions which are transferred to the robotic lawnmower.

### Background

A robotic lawnmower system of this kind is disclosed in EP-3767420-A1 where a work area is filmed using a mobile device, and borders in the work area are defined by sequentially placing virtual markers in a user interface illustrating images of the work area. In order to sense the mobile device's position in a global coordinate system, the charging station of the lawnmower and one other position with known coordinates are registered. The intention is to provide a navigation function in the robotic lawnmower that makes installing a boundary cable unnecessary.

In practice, the positions recorded with the mobile device may drift increasingly in relation to the global coordinate system in between said known positions, mobile device positioning usually rely on GPS, accelerometers and visual odometry, which cannot match RTK-based positioning. This implies that there may be differences between the positions sensed by the mobile device and actual position in the global coordinate system in which the robotic lawnmower navigates. This means that the positions in which the user believes to be placing the virtual markers, differ from the actual positions in the global coordinate system. If the robotic lawnmower is used based on those positions, this may result in grass being left uncut or in the robotic lawnmower processing areas which should be spared, for instance. The aforementioned document also describes an alternative method where the mobile device is used as a remote control, steering the robotic lawnmower along a path that defines the work area boundaries and recording the corresponding positions.

One problem associated with prior art is therefore how to improve the definition of a work area boundary such that precision is improved.

### Summary

One object of the present disclosure is therefore to provide a robotic lawnmower system with improved precision.

This object is achieved by means of a method in a robotic lawnmower system as defined in claim 1. More specifically, in a method of the initially mentioned kind, it is determined by calibrating, in a first position of the robotic lawnmower, and based on the position determined by the robotic lawnmower and the position of the robotic lawnmower in an image captured by the camera, a calibrated position of the mobile device. Based on this calibration, a capability zone is defined, within which the mobile device can sense positions with a minimum level of estimated alignment with respect to positions sensed by the robotic lawnmower. An indication of the limitations of the capability zone is presented in the user interface of the mobile device.

In this way, the user can calibrate the position and orientation of the mobile device using the position sensed by the robotic lawnmower and can record segments of a work area boundary with high precision based on this calibration within the capability zone. This provides a work area boundary with improved precision that can be sent to the robotic lawnmower, which subsequently can process the work area with improved precision.

The robotic lawnmower may subsequently be moved to a second position, where the calibration is repeated, and a second capability zone is defined. In this way, a large area can be covered with sufficient precision.

In order to carry out this move, a request to move may be received from the user in the user interface, and a message may then be sent, invoking the robotic lawnmower to move to the proximity of the mobile device. This message may also be sent out automatically, without inputs from the user. Alternatively, the robotic lawnmower may be configured to follow the mobile device.

It is possible to present a visual guide on the user interface to indicate a suitable calibration position in relation to the robotic work tool. This facilitates calibration, and ensures a suitable positional relation between the mobile device and the robotic lawnmower at calibration.

A visual indication may be given in the user interface when calibration has taken place.

It may be advantageous to detect the heading of the robotic work tool in the image when calibrating, and the robotic work tool may simultaneously report its heading to the mobile device. This provides an improved directional precision in the calibration.

A movement of the robotic lawnmower may be carried out during each calibration in order to further improve the precision.

The present disclosure also considers robotic lawnmower system, configured to carry out the steps of the above methods. Then, a robotic lawnmower system comprises a robotic lawnmower, configured to process a work area and to determine its position in the work area, and a separate, mobile device configured to determine its position in the work area and having a camera configured to capture images of the work area and a display which provides a user interface, enabling a user to define boundary segments of the work area boundary therein as a set of positions which are transferred to the robotic lawnmower, The system is configured to determine by calibrating, in a first position of the robotic lawnmower, and based on the position determined by the robotic lawnmower and the position of the robotic lawnmower in an image captured by said camera, a calibrated position of the mobile device. Further, the system defines, based on said calibration, a capability zone, within which the mobile device can sense positions with a minimum level of estimated alignment with respect to positions sensed by the robotic lawnmower, and is configured to present in the user interface of the mobile device an indication of the limitations of said capability zone. This system may be altered and varied in correspondence with the method, generally the system is then configured to carry out the corresponding steps of the method.

The present disclosure also considers a processing equipment comprising at least one processor and memory, configured to carry out the above-defined method.

The present disclosure also considers a computer program product having instructions which, when the program is executed on one or more processors, carries out the above-defined method.

The present disclosure also considers a computer-readable storage medium having stored thereon the above computer program product.

### Brief description of the drawings

Fig 1 illustrates a robotic lawnmower.
Fig 2 illustrates a mobile device used to provide an AR interface.
Fig 3 illustrates using a mobile device to record segments of a work area.
Fig 4 illustrates the calibration of a mobile device using a robotic lawnmower.
Fig 5 illustrates a first capability zone established after calibration of a mobile device.
Fig 6 illustrates a second capability zone established after calibration of a mobile device.
Fig 7 shows a sequence of capability zones used to record segments of a work area.
Figs 8 and 9 illustrate the use of a visual guide in a user interface to carry out calibration.
Fig 10 illustrates another example of indicating a capability zone in a user interface.

### Detailed description

The present disclosure relates to robotic lawnmower systems. Such systems comprise a robotic lawnmower, or similar device, which is configured to process a work area. Further, a charging station, intermittently charging the lawnmower may be provided, although in the context of the present disclosure the charging station is not necessary.

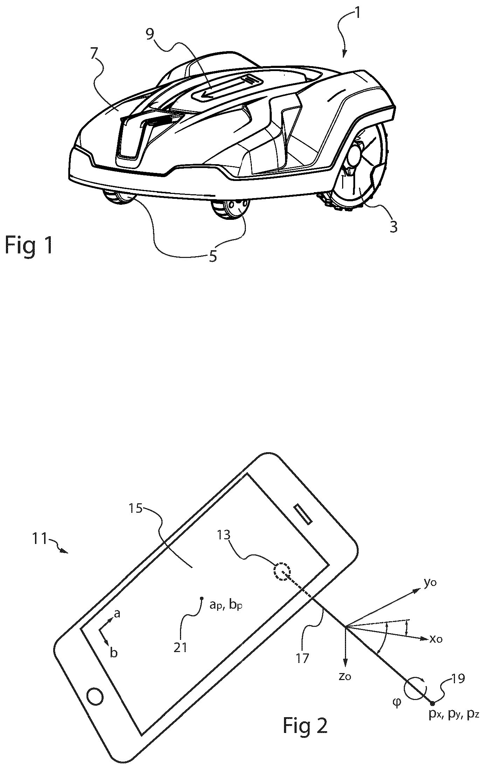

Fig 1 shows an example of a robotic lawnmower 1 comprising rear driving wheels 3, which may be controlled individually, such that they also accomplish steering of the robotic lawnmower, and front caster wheels 5 that may be undriven, although different configurations are conceivable in the context of the present disclosure, such as 4-wheel driving configurations, articulated configurations, etc. The robotic lawnmower may have an outer housing 7 provided with markings 9, as will be discussed.

The lawnmower is configured to autonomously process a work area in a structured or more or less random fashion depending on desired settings. The lawnmower is further configured to be or become aware of its position in the work area as well as the layout of the work area.

The position sensing may be accomplished using a satellite navigation system, which may be enhanced using real-time kinematics, RTK, to obtain a precision of down to a few centimeters with regard to the lawnmower's position. However, in this disclosure, other options are considered, such as providing a local navigation system, which the robotic lawnmower has access to, not depending on satellite navigation.

Methods exist to provide the robotic lawnmower with information regarding the work area in which a user wants the robotic lawnmower to operate. For instance, it has been suggested to lead the lawnmower around the outer boundary of the work area once, the lawnmower being remotely controlled, and letting the lawnmower record the positions of the outer boundary using its navigation system. This allows the robotic lawnmower to recognize its work area. This technique, sometimes referred to as "walk-the-dog", is relatively time-consuming and not very flexible. If the user decides to change the boundary to some extent, the process will likely need be repeated, even if the change is small.

Therefore, in this context, the use of so-called augmented reality, AR, functions are considered a promising alternative. Then, a user interface is provided on a separate, mobile device 11 illustrated in fig 2.

The mobile device 11 comprises a built-in camera 13 and a display 15 which is capable of producing images taken by the camera and at the same time accomplish a user interface. The mobile device may typically be a smartphone or a tablet with touch-screen input capability, although other alternatives would be conceivable using other input means.

The mobile device 11 typically has a GPS or other satellite navigation functionality allowing the mobile device to determine its position. Further, accelerometers/gyros in the mobile device 11 allows it to determine its orientation, both the orientation of the camera's 13 optical axis 17 in a three-dimensional coordinate system (x, y, z) and the mobile device's 11 roll angle φ in relation to that optical axis 17. The accelerometers may also detect movements without change of orientation. Combinations of accelerometers gyros and magnetometers may be designated as an inertia measurement unit, IMU.

Thereby, it is possible to provide a mapping between positions 19 (pₓ, p_{y}, p_{z}) in a work area depicted by the camera 13 and a corresponding position 21 (aₚ, bₚ) in the mobile device's 11 display 15. This makes it possible to display for instance a virtual work area boundary in the display, as an addition to the image captured by the camera.

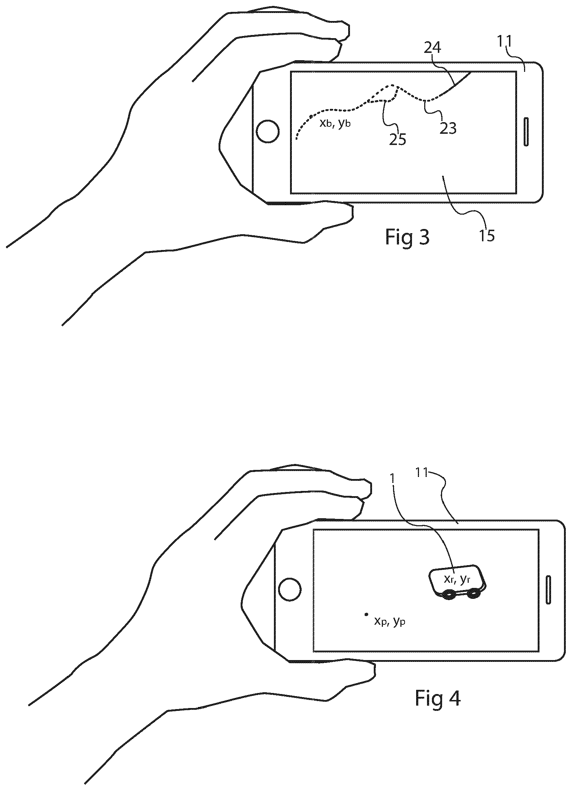

This is illustrated with an example in fig 3, where the user uses a mobile device 11 in the form of a smartphone which provides on its display 15 an image of for instance a part of a garden which is simultaneously captured by the smartphone camera 13. In addition to this image, virtual information such as a work area boundary 23 defined by a sequence of positions xb, yb, which are mapped between the work area and the display. Thus, if the user changes the camera's view, the work area boundary 23 on the display moves correspondingly. In this interface, the user can add a work area boundary 23 as the one illustrated using for instance a touch-screen functionality. It is also possible to edit an already entered boundary 23 by providing an updated section 25, for instance. It is possible to include an indication 24 regarding the quality of the position detection in the mobile device as will be discussed.

The positions in the display 15 can be translated into positions in the garden or the like, which defines the work area for the robotic lawnmower 1. Those positions can thus transmitted to the robotic lawnmower 1 which may operate accordingly, typically remaining within an outer boundary, and optionally avoiding certain areas within that outer boundary, treating other areas according to certain schemes, etc.

In a hypothetical case where the mobile device 11 could detect its position and orientation with very high precision, it would have been possible for the user to move around for instance the entire periphery of a garden and define an outer work area boundary 23 within which the robotic lawnmower 1 is intended to operate and to transmit the corresponding position data to the robotic lawnmower 1. In most real applications however, the mobile device's 11 position precision is however not sufficient for this purpose. Most mobile devices can use GPS or other satellite navigation features to acquire a rough position estimate. Accelerometers may resolve the orientation of the mobile device. Further, visual odometry, i.e. an analysis of camera image data in order to resolve changes in position and orientation of the mobile device, may be used to enhance accelerometer and GPS data. So called vSLAM-, visual simultaneous localization and mapping, -algorithms provide such functionality. However, this does not always provide data in the mobile device 11 with sufficiently high precision.

In the present disclosure, the precision of the user interface is enhanced using the robotic lawnmower's 1 positioning system. If based for instance on RTK, that positioning system will have a high precision.

Fig 4 illustrates how a user captures the robotic lawnmower 1 in the camera view of the mobile device 11. At the same time, the robotic lawnmower 1 may communicate its position xr, yr to the mobile device. This allows for a more precise calibration of the mapping between the user interface on the mobile device 11 and actual positions xp, yp in the surroundings as sensed by the robotic lawnmower 1.

The robotic lawnmower 1 as mentioned senses its position with high precision for instance using RTK or similar technologies. By finding the lawnmower 1 in the image data and knowing the position of the robotic lawnmower 1 at that time, the combination of the position and the orientation of the mobile device 11 may be calibrated to a higher precision. This calibration may be achieved in different ways.

Either it is possible, using image analysis, to detect the robotic lawnmower in the image data, or it is possible to prompt the user to point the mobile device 11 in such a way that the robotic lawnmower is located in a particular portion of the camera's view and to indicate when this is the case as will be discussed. Those alternatives could also be combined such that the user pointing the camera view in a particular way simplifies an image analysis based detection of the robotic lawnmower's location in the view.

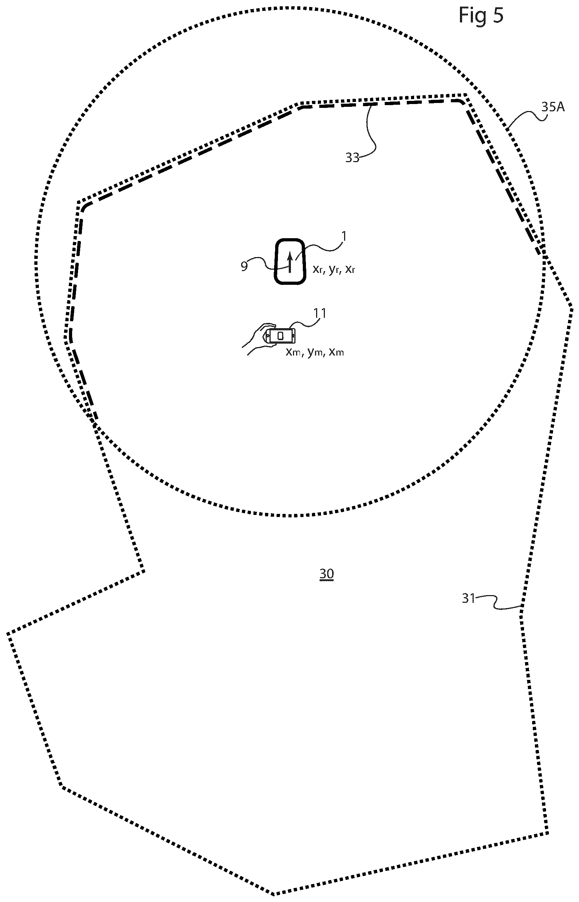

It is possible to detect the heading of the robotic lawnmower 1 in the image. This may be facilitated by a heading indicating marking 9, cf. fig 1 and fig 5, such as an arrow that facilitates the heading indication in the image. However, the shape of the robotic lawnmower 1 as a whole also indicates the heading to some extent.

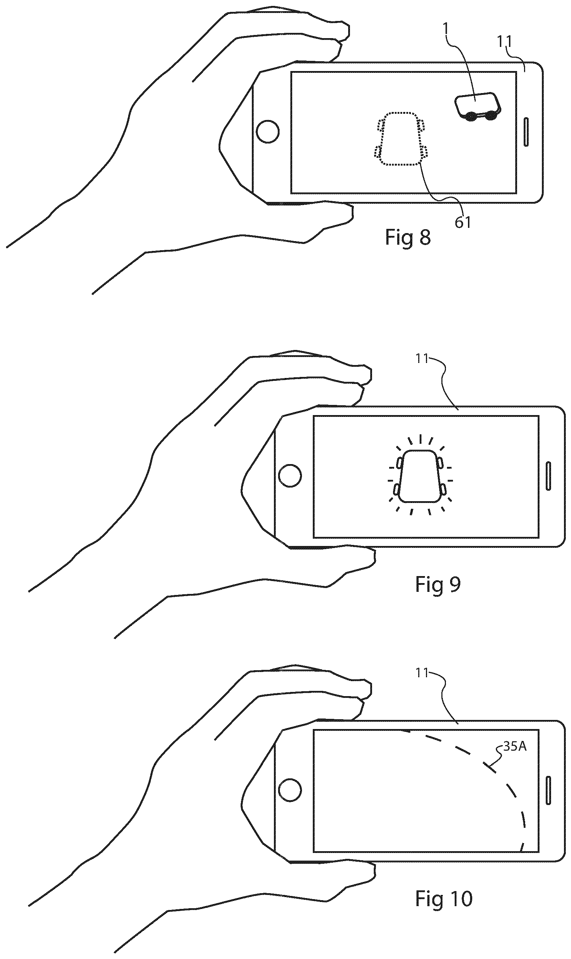

With reference to an example in figs 8 an 9, a visual guide 61 may be presented on the mobile device 11 user interface to indicate a suitable calibration position of the mobile device 11 in relation to the robotic lawnmower 1. The visual guide may for instance be a silhouette of the robotic lawnmower as seen from a specific direction and distance.

If the user moves and directs the mobile device 11 such that the visual guide 61 coincides with the robotic lawnmower 1, this facilitates the detection of the robotic lawnmower 11 in the image. Further, the quality of the calibration may be improved as it may be made sure that the calibration takes place at a relatively small distance from the robotic lawnmower and with a predefined positional relationship between the robotic lawnmower 1 and the mobile device. As shown in fig 9, there may be given feedback to the user when calibration has taken place, for instance a visual indication may be provided in the user interface. In one example, the aforementioned visual guide may change its appearance, e.g. may change color

Returning to fig 4 and 5, it is possible to let the robotic lawnmower 1 communicate its position xr, yr, zr at the time of calibration to the mobile device 11, allowing an application program in the mobile device to calibrate the mobile device position xm, ym, zm, and to resolve positions in the user interface thereafter, or it would be possible to simply record the image data and inputs produced when the user interacts with the user interface and thereafter transmitting the data to the robotic lawnmower 1 or another node and to determine an input work area boundary based on this data at another node in the systems besides the mobile device 11.

Typically, the separate mobile device 11 may be in direct contact with the robotic lawnmower 1, via a wireless interface, such as Bluetooth or the like. Alternatively, the communication may take place via a third, remote node, or each of the robotic lawnmower and the separate mobile device may communicate with the third, remote node where coordination of data takes place. Regardless of this, the calibration and the subsequent recording and editing of work area data will result in position data which is sent to the robotic lawnmower 1 for use when processing the work area.

In the case where the robotic lawnmower 1 communicates its position to the mobile device 11 at a point of time where the robotic lawnmower 1 is in the camera view of the mobile device 11, the positioning of the mobile device 11 can be enhanced using this data, and the user can begin defining for instance an outer work area boundary nearby. However, as soon as the robotic lawnmower 1 leaves the camera view, the mobile device 11 becomes dependent on its own positioning and orientation determination. Therefore, the positioning of the mobile device 11 begins to drift in relation to the positioning determined by the robotic lawnmower 1.

However, within an area near the robotic lawnmower 1, the mobile device can determine positions with a precision that is sufficient for reliable subsequent operation of the robotic lawnmower 1. This is illustrated with an example in fig 5.

In fig 5, the user intends to define outer borders 31 of a work area 30. This is done using a mobile device 11 as discussed above where the user can mark positions of the work area borders 31 in the user interface. Initially, the mobile device 11 detects the robotic lawnmower 1, and receives the robotic lawnmowers 1 current position, typically from the robotic lawnmower 1 itself, or from another node which is aware of this position. The mobile device 11 may receive this data via a short-range wireless interface such as BLUETOOTH.

When the mobile device 11 has associated the robotic lawnmower 1 in its camera view with the corresponding received position, the user interface of the mobile device 11 can be considered calibrated into the positioning system of the robotic lawnmower 1. Thus, the user can begin registering segments 33 of the work area boundary 31 in the user interface.

As the mobile device 11 moves away from the lawnmower 1, the precision of the mobile device's 11 position detection decreases. In the present disclosure, a zone 35 is defined in which the decrease in precision is acceptable. Typically this is corresponding to a radius from the calibration position as illustrated in fig 5, but this may vary depending on how the mobile device is moved, when being distanced away from the robotic lawnmower 1, as will be discussed.

Then, when the user registers segments 33 of the work area, this can be done satisfactorily within the zone 35A , which can be designated as a capability zone.

An indication of the limitations of the zone 35A is presented in the user interface of the mobile device 11. This can be done in different ways.

For instance, the user interface may simply inform the user that he has reached or is close to reaching the edge of the capability zone, using text or a symbol. It is also possible in the user interface to disable recording of work area boundary segments 33 outside the capability zone 35. Another option, as illustrated in fig 3, is to make a part 24 of an inputted segment 23 have a different appearance for being input outside the capability zone.

It is also possible to apply different color filters, in the presented image filmed in the garden or the like, depending on whether positions in the image are inside or outside the capability zone 35A or simply to superimpose the boundary of the capability zone 35A in the image as illustrated in fig 10.

As illustrated in fig 5, only a portion of an intended work area 31 is within the capability zone 35. Therefore, some segments 33 of the intended work area boundary 31 can be registered but not the entirety thereof.

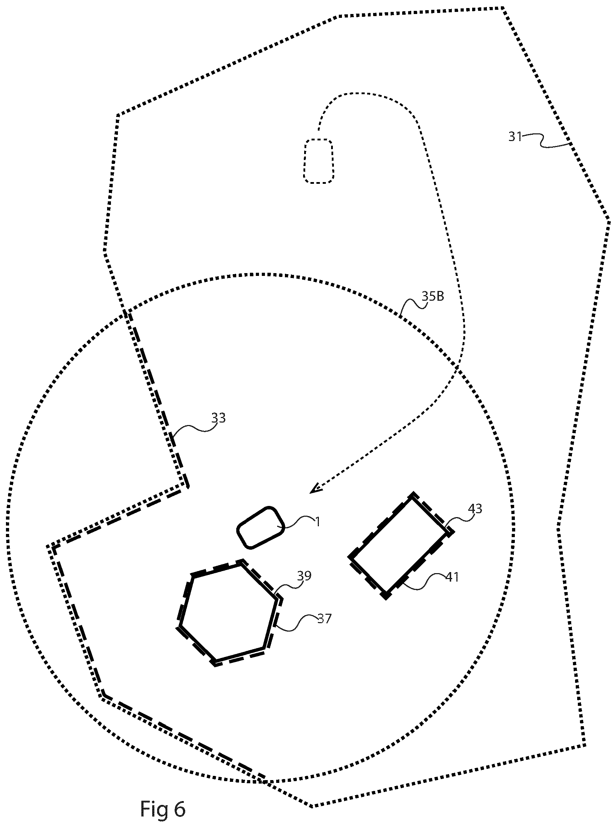

Therefore, a new capability zone 35B can be established as illustrated in fig 6. Then, the user moves with the user interface 11, and the robotic lawnmower 1 moves with the user to a new position in the intended work area 30, or at least to a position close enough to the work area 30 such that a new capability zone 35B can be established which facilitates recording of new segments 33 along the intended work area boundary 31.

The user thus calibrates the mobile device 11 positioning again by recording the robotic lawnmower 1 in the user interface as shown in fig 4 and receiving the current robotic lawnmower 1 position as detected by the robotic lawnmower 1 itself. This establishes the new capability zone 35B within which the mobile device 11 can record positions for new segments 33 of the intended work area. Note that this is not limited to the outer boundary 31 of the work area. It is also possible to detect positions for segments 37 of an exclusion zone 39 within the intended work area 31, e.g. a flower bed 39 that is not intended to be processed by the robotic lawnmower 1. Further, it is possible to register in the user interface segments 41 of a conditional zone 43 where processing should be carried out in a specific way or under certain conditions. For instance, some areas should not be cut during dry periods. All those segments 33, 37, 41 can be recorded within the new capability zone 35B.

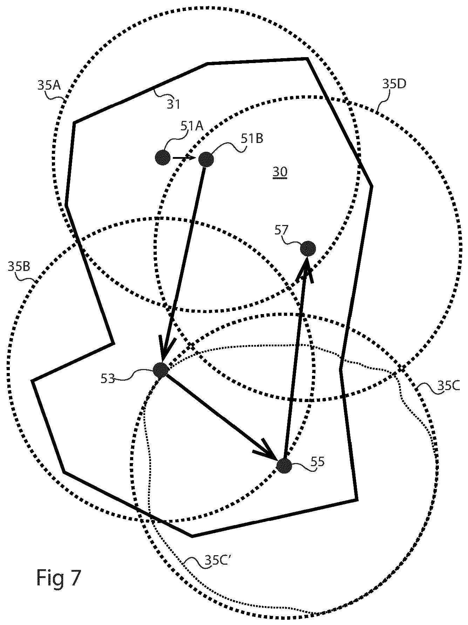

In this way, an entire work area 30 can be registered with one or more likely a few calibrations of the mobile device 11 with the robotic lawnmower 1. In the work area illustrated in fig 7, it would be possible to calibrate the mobile device 11 with the robotic work tool 1 at four different locations 51A/B, 53, 55, 57, thereby successively achieving four different capability zones 35A, 35B, 35C, 35D within which all desired segments of a work area boundary 31 can be recorded with sufficient precision.

It is possible, as illustrated with an example in fig 7, to make the robotic lawnmower 1 move slightly from a first 51A to a second 51B position during a calibration event. Then, the robotic lawnmower 1 may report its position before and after the movement to the mobile device 11. This provides an improved calibration where more information relating to the distance between the mobile device 11 and the robotic lawnmower 1 is accomplished. Additionally, the heading of the robotic lawnmower is resolved.

As mentioned, the capability zones 35A-D need not be circular with the last position given by the robotic lawnmower 1 at their centers. This may be considered an ideal capability zone. Depending on how the mobile device 11 is distanced from that position, the capability zone may be updated.

As one example, moving away from a last calibrated position 55 in a straight line towards the periphery of the capability zone 35C, that capability zone may be maintained to a greater extent than if a zig-zag pattern in moving towards the periphery is employed.

Also, the mobile device's 11 allowed capability of sequentially detecting positions while moving away from the last calibrated position 55 may be taken into account. For instance, if the mobile device 11 is pointed towards the ground and can continuously update its position also using visual odometry, the position detection may be better than if the camera is pointed towards the sky and the mobile device 11 only detects positions using accelerometers and/or satellite navigation or similar. The same applies if the satellite signals are obstructed by trees, for instance, resulting in poor positioning.

In the above examples, the capability zone 35C shrinks, but situations where it is possible to restore or even expand the initial capability zone are also conceivable. For instance, if employing a vSLAM algorithm in the mobile device 11, it is possible that the algorithm recognizes a previously detected object and restores its precision from the last time that object was detected.

Therefore, the indication of the initial capability zone 35C may be gradually updated into an updated capability zone 35C' during use of the mobile device 11 for recording work area segments.

The movement of the robotic lawnmower 1 between the points 51A/B, 53, 55, 57 where calibration takes place may be initiated in different ways. It is possible for the user, once he realizes that he has moved beyond a capability zone 35A to call for the robotic lawnmower 1 to move to his location in order to create a new capability zone. The mobile device 11 may then transmit its new position to the robotic lawnmower 1.

Although this new position is determined with a relatively low precision it is sufficient for the robotic lawnmower to approach the user carrying the mobile device 11. This call to the robotic lawnmower 1 may also be sent automatically by the mobile device 11 which optionally may prompt the user to recalibrate with the robotic lawnmower once it has arrived.

Another possibility is to let the robotic lawnmower 1 continuously follow the user with the mobile device 11, typically using position indications received from the mobile device.

In addition to the method and system described above, the present disclosure considers a corresponding data processing equipment comprising at least one processor and memory, and being configured to carry out the method. A corresponding computer program product for executing the method and a computer-readable storage medium having stored thereon the computer program is also considered.

The above work area 30 may be defined by a set of coordinates in a geodetic system format such as WGS84, providing positions such as 57°51°10.4"N; 16°33'23.4"E. Other systems such as NAD83 may also be considered, as well as local coordinate systems intended specifically for lawnmowing or other similar purposes.

The invention is not restricted to the described embodiments and may be varied and altered in different ways within the scope of the appended claims.

## Claims

1. A method for defining a boundary (31, 39) of a work area (30) in a robotic lawnmower system, the system comprising
- a robotic lawnmower (1), configured to process the work area (30) and to determine its position (xr, yr, zr) in the work area, and
- a separate, mobile device (11) configured to determine its position (xm, ym, zm) in the work area (30) and having a camera (13) configured to capture images of the work area (30) and a display (15) which provides a user interface, enabling a user to define boundary segments (33, 37) of the work area boundary (31, 39) therein as a set of positions which are transferred to the robotic lawnmower (1), **characterized by**
- determining by calibrating, in a first position (51) of the robotic lawnmower, and based on the position (xr, yr, zr) determined by the robotic lawnmower (1) and the position of the robotic lawnmower in an image captured by said camera (13), a calibrated position (xm+, ym+, zm+) of the mobile device (11),
- defining, based on said calibration, a first capability zone (35A), within which the mobile device (11) can sense positions with minimum level of estimated alignment with respect to positions sensed by the robotic lawnmower (1), and
- presenting in the user interface of the mobile device (11) an indication (24) of the limitations of said first capability zone (35A).

2. Method according to claim 1, wherein the robotic lawnmower (1) is subsequently moved to a second position (53), the calibration is repeated and a second capability zone (35B) is defined.

3. Method according to claim 2, wherein a request to move is received in the user interface, and a message is sent invoking the robotic lawnmower (1) to move to the proximity of the mobile device (11).

4. Method according to claim 2, wherein the robotic lawnmower (1) is configured to follow the mobile device (11).

5. Method according to any of the preceding claims wherein a visual guide (61) is presented on the user interface to indicate a suitable calibration position in relation to the robotic work tool.

6. Method according to claim 5, wherein a visual indication is given in the user interface when calibration has taken place.

7. Method according to any of the preceding claims wherein the heading of the robotic work tool is detected in the image, and the robotic work tool reports its heading to the mobile device.

8. Method according to any of the preceding claims, wherein a movement (51A, 51B) of the robotic lawnmower (1) is carried out in each calibration.

9. A robotic lawnmower system comprising
- a robotic lawnmower (1), configured to process a work area (30) and to determine its position (xr, yr, zr) in the work area, and
- a separate, mobile device (11) configured to determine its position (xm, ym, zm) in the work area (30) and having a camera (13) configured to capture images of the work area (30) and a display (15) which provides a user interface, enabling a user to define boundary segments (33, 37) of the work area boundary (31, 39) therein as a set of positions which are transferred to the robotic lawnmower (1), **characterized by** the mobile device (11) :
- being configured to determine, by calibrating, in a first position (51) of the robotic lawnmower, and based on the position (xr, yr, zr) determined by and received from the robotic lawnmower (1) and the position of the robotic lawnmower in an image captured by said camera (13), a calibrated position (xm+, ym+, zm+) of the mobile device (11),
- being configured to define, based on said calibration, a capability zone (35A), within which the mobile device (11) can sense positions with minimum level of estimated alignment with respect to positions sensed by the robotic lawnmower (1), and
- being configured to present in the user interface of the mobile device (11) an indication (24) of the limitations of said capability zone.

10. Data processing equipment, which is implemented in a mobile device (11) having a camera (13) and means for communicating with a robotic lawnmower (1) comprising at least one processor and a memory, configured to carry out the method of any of the claims 1-8.

11. A computer program product comprising instructions which, when the program is executed on a data processing equipment according to claim 10, carries out the method according to any of the claims 1-8.

12. A computer-readable storage medium having stored thereon the computer program product of claim 11.

## Patentansprüche

1. Verfahren zum Definieren einer Begrenzung (31,39) eines Arbeitsbereichs (30) in einem Roboter-Rasenmähersystem, das System umfassend
- einen Roboter-Rasenmäher (1), der konfiguriert ist, um den Arbeitsbereich (30) zu verarbeiten und seine Position (xr, yr, zr) in dem Arbeitsbereich zu bestimmen, und
- eine separate, mobile Vorrichtung (11), die konfiguriert ist, um ihre Position (xm, ym, zm) in dem Arbeitsbereich (30) zu bestimmen und eine Kamera (13), die konfiguriert ist, um Bilder des Arbeitsbereichs (30) aufzunehmen, und ein Display (15) aufweist, das eine Bedienerschnittstelle bereitstellt, die es einem Benutzer ermöglicht, Begrenzungssegmente (33, 37) der Arbeitsbereichsbegrenzung (31, 39) darin als einen Satz von Positionen zu definieren, die an den Roboter-Rasenmäher (1) übertragen werden, **gekennzeichnet durch**
- Bestimmen durch Kalibrieren, in einer ersten Position (51) des Roboter-Rasenmähers, und basierend auf der Position (xr, yr, zr), die durch den Roboter-Rasenmäher (1) bestimmt wird, und der Position des Roboter-Rasenmähers in einem Bild, das durch die Kamera (13) aufgenommen wird, einer kalibrierten Position (xm+, ym+, zm+) der mobilen Vorrichtung (11),
- Definieren, basierend auf der Kalibrierung, einer ersten Fähigkeitszone (35A), innerhalb welcher die mobile Vorrichtung (11) Positionen mit einem minimalen Niveau geschätzter Ausrichtung in Bezug auf Positionen, die durch den Roboter-Rasenmäher (1) erfasst werden, erfassen kann, und
- Darstellen in der Bedienerschnittstelle der mobilen Vorrichtung (11) einer Anzeige (24) der Beschränkungen der ersten Fähigkeitszone (35A).

2. Verfahren nach Anspruch 1, wobei der Roboter-Rasenmäher (1) anschließend zu einer zweiten Position (53) bewegt wird, die Kalibrierung wiederholt wird und eine zweite Fähigkeitszone (35B) definiert wird.

3. Verfahren nach Anspruch 2, wobei eine Anfrage für eine Bewegung in der Bedienerschnittstelle empfangen wird und eine Nachricht gesendet wird, die den Roboter-Rasenmäher (1) aufruft, sich in die Nähe der mobilen Vorrichtung (11) zu bewegen.

4. Verfahren nach Anspruch 2, wobei der Roboter-Rasenmäher (1) konfiguriert ist, um der mobilen Vorrichtung (11) zu folgen.

5. Verfahren nach einem der vorstehenden Ansprüche, wobei eine visuelle Führung (61) auf der Bedienerschnittstelle dargestellt wird, um eine geeignete Kalibrierungsposition im Verhältnis zu dem robotischen Arbeitswerkzeug anzuzeigen.

6. Verfahren nach Anspruch 5, wobei eine visuelle Anzeige in der Bedienerschnittstelle erfolgt, wenn eine Kalibrierung stattgefunden hat.

7. Verfahren nach einem der vorstehenden Ansprüche, wobei die Richtung des robotischen Arbeitswerkzeugs in dem Bild erkannt wird und das robotische Arbeitswerkzeug seine Richtung an die mobile Vorrichtung meldet.

8. Verfahren nach einem der vorstehenden Ansprüche, wobei eine Bewegung (51A, 51B) des Roboter-Rasenmähers (1) in jeder Kalibrierung durchgeführt wird.

9. Roboter-Rasenmähersystem umfassend
- einen Roboter-Rasenmäher (1), der konfiguriert ist, um einen Arbeitsbereich (30) zu verarbeiten und seine Position (xr, yr, zr) in dem Arbeitsbereich zu bestimmen, und
- eine separate, mobile Vorrichtung (11), die konfiguriert ist, um ihre Position (xm, ym, zm) in dem Arbeitsbereich (30) zu bestimmen und eine Kamera (13), die konfiguriert ist, um Bilder des Arbeitsbereichs (30) aufzunehmen, und ein Display (15) aufweist, das eine Bedienerschnittstelle bereitstellt, die es einem Benutzer ermöglicht, Begrenzungssegmente (33, 37) der Arbeitsbereichsbegrenzung (31, 39) darin als einen Satz von Positionen zu definieren, die an den Roboter-Rasenmäher (1) übertragen werden,
**dadurch gekennzeichnet, dass** die mobile Vorrichtung (11):
- konfiguriert ist, um durch Kalibrieren in einer ersten Position (51) des Roboter-Rasenmähers und basierend auf der Position (xr, yr, zr), die durch den Roboter-Rasenmäher (1) bestimmt und von diesem empfangen wird, und der Position des Roboter-Rasenmähers in einem Bild, das durch die Kamera (13) aufgenommen wird, eine kalibrierte Position (xm+, ym+, zm+) der mobilen Vorrichtung (11) zu bestimmen,
- konfiguriert ist, um basierend auf der Kalibrierung eine Fähigkeitszone (35A) zu definieren, innerhalb welcher die mobile Vorrichtung (11) Positionen mit einem minimalen Niveau geschätzter Ausrichtung in Bezug auf Positionen, die durch den Roboter-Rasenmäher (1) erfasst werden, erfassen kann, und
- konfiguriert ist, um in der Bedienerschnittstelle der mobilen Vorrichtung (11) eine Anzeige (24) der Beschränkungen der Fähigkeitszone darzustellen.

10. Datenverarbeitungsanlage, die in einer mobilen Vorrichtung (11), die eine Kamera (13) und Mittel zum Kommunizieren mit einem Roboter-Rasenmäher (1) aufweist, implementiert sind, umfassend mindestens einen Prozessor und einen Speicher, die konfiguriert sind, um das Verfahren nach einem der Ansprüche 1 bis 8 durchzuführen.

11. Computerprogrammprodukt, umfassend Anweisungen, die, wenn das Programm auf Datenverarbeitungsanlagen nach Anspruch 10 ausgeführt wird, das Verfahren nach einem der Ansprüche 1 bis 8 durchführen.

12. Computerlesbares Speichermedium, auf dem das Computerprogrammprodukt nach Anspruch 11 gespeichert ist.

## Revendications

1. Procédé permettant de définir une limite (31, 39) d'une région de travail (30) dans un système de tondeuse à gazon robotisée, le système comprenant
- une tondeuse à gazon robotisée (1), configurée pour traiter la région de travail (30) et pour déterminer sa position (xr, yr, zr) dans la région de travail, et
- un dispositif mobile distinct (11) configuré pour déterminer sa position (xm, ym, zm) dans la région de travail (30) et ayant une caméra (13) configurée pour capturer des images de la région de travail (30) et un dispositif d'affichage (15) qui fournit une interface utilisateur, permettant à un utilisateur de définir des segments de limites (33, 37) de la limite de région de travail (31, 39) sous la forme d'un ensemble de positions qui sont transférées à la tondeuse à gazon robotisée (1), **caractérisé par**
- la détermination par étalonnage, dans une première position (51) de la tondeuse à gazon robotisée, et sur la base de la position (xr, yr, zr) déterminée par la tondeuse à gazon robotisée (1) et de la position de la tondeuse à gazon robotisée dans une image capturée par ladite caméra (13), une position étalonnée (xm+, ym+, zm+) du dispositif mobile (11),
- la définition, sur la base dudit étalonnage, d'une première zone de capacité (35A), à l'intérieur de laquelle le dispositif mobile (11) peut détecter des positions avec un niveau minimum d'alignement estimé par rapport aux positions détectées par la tondeuse à gazon robotisée (1), et
- la présentation, dans l'interface utilisateur du dispositif mobile (11), d'une indication (24) des limites de ladite première zone de capacités (35A).

2. Procédé selon la revendication 1, dans lequel la tondeuse à gazon robotisée (1) est ensuite déplacée vers une seconde position (53), l'étalonnage est répété et une seconde zone de capacité (35B) est définie.

3. Procédé selon la revendication 2, dans lequel une demande de déplacement est reçue dans l'interface utilisateur, et un message est envoyé pour invoquer la tondeuse à gazon robotisée (1) pour se déplacer à proximité du dispositif mobile (11).

4. Procédé selon la revendication 2, dans lequel la tondeuse à gazon robotisée (1) est configurée pour suivre le dispositif mobile (11).

5. Procédé selon l'une quelconque des revendications précédentes, dans lequel un guide visuel (61) est présenté sur l'interface utilisateur pour indiquer une position d'étalonnage appropriée par rapport à l'outil de travail robotisé.

6. Procédé selon la revendication 5, dans lequel une indication visuelle est donnée dans l'interface utilisateur lorsque l'étalonnage a eu lieu.

7. Procédé selon l'une quelconque des revendications précédentes, dans lequel l'orientation de l'outil de travail robotisé est détectée dans l'image, et l'outil de travail robotisé signale son orientation au dispositif mobile.

8. Procédé selon l'une quelconque des revendications précédentes, dans lequel un mouvement (51A, 51B) de la tondeuse à gazon robotisée (1) est effectué lors de chaque étalonnage.

9. Système de tondeuse à gazon robotisé comprenant
- une tondeuse à gazon robotisée (1), configurée pour traiter une région de travail (30) et pour déterminer sa position (xr, yr, zr) dans la région de travail, et
- un dispositif mobile distinct (11) configuré pour déterminer sa position (xm, ym, zm) dans la région de travail (30) et ayant une caméra (13) configurée pour capturer des images de la région de travail (30) et un écran (15) qui fournit une interface utilisateur, permettant à un utilisateur de définir des segments de frontière (33, 37) de la limite de région de travail (31, 39) sous la forme d'un ensemble de positions qui sont transférées à la tondeuse à gazon robotisée (1), **caractérisé par** le dispositif mobile (11) :
- étant configuré pour déterminer, par étalonnage, dans une première position (51) de la tondeuse à gazon robotisée, et sur la base de la position (xr, yr, zr) déterminée par et reçue de la tondeuse à gazon robotisée (1) et de la position de la tondeuse à gazon robotique dans une image capturée par ladite caméra (13), une position étalonnée (xm+, ym+, zm+) du dispositif mobile (11),
- étant configuré pour définir, sur la base dudit étalonnage, une zone de capacité (35A), à l'intérieur de laquelle le dispositif mobile (11) peut détecter des positions avec un niveau minimum d'alignement estimé par rapport à des positions détectées par la tondeuse à gazon robotisée (1), et
- étant configuré pour présenter dans l'interface utilisateur du dispositif mobile (11) une indication (24) des limites de ladite zone de capacité.

10. Équipement de traitement de données, qui est mis en œuvre dans un dispositif mobile (11) ayant une caméra (13) et un moyen pour communiquer avec une tondeuse à gazon robotisée (1) comprenant au moins un processeur et une mémoire, configuré pour réaliser le procédé selon l'une quelconque des revendications 1 à 8.

11. Produit-programme informatique comprenant des instructions qui, lorsque le programme est exécuté sur un équipement de traitement de données selon la revendication 10, réalise le procédé selon l'une quelconque des revendications 1 à 8.

12. Support de stockage lisible par ordinateur sur lequel est stocké le programme informatique selon la revendication 11.
